# EUROPEAN PATENT SPECIFICATION

(11) **EP 1 619 491 B1**
(45) Date of publication and mention of the grant of the patent: **11.03.2009**
(21) Application number: 05016677.6
(22) Date of filing: 17.05.1999
(51) Int. Cl.: G01N 21/64

(54) **Optical instrument, particulary for monitoring DNA polymerase chain reactions**
Optisches Gerät insbesondere zur Überwachung von DNS-Polymerasekettenreaktionen
Instrument optique servant à surveiller des réactions de polymérase en chaîne d'ADN

(30) Priority: 16.05.1998 US 85765 P; 14.07.1998 US 92784 P
(43) Date of publication of application: 25.01.2006
(62) Divisional of application: 99924365.2
(73) Proprietor: Applera Corporation, Norwalk, CT 06851-1070 (US)
(72) Inventor: Gambini, Michael R., Monroe, CT 06468 (US); Atwood, John G., Redding, CT 06896 (US); Young, Eugene F., Marietta, Georgia 30062 (US); Lakatos, Edward J., Bethel, CT 06801 (US); Cerrone, Anthony L., New Haven, CT (US)
(74) Representative: Beetz & Partner

(56) References cited:
- EP-A- 0 065 409
- EP-A- 0 545 284
- EP-A- 0 640 828
- WO-A-98/13683
- US-A- 5 355 215
- US-A- 5 736 333

## Description

This invention relates to biochemical analyses, and particularly to quantitative monitoring of DNA during a polymerase chain reaction (PCR) process. The invention particularly relates to an optical instrument, preferably for DNA polymerase chain reaction process monitoring.

### BACKGROUND

Polymerase chain reaction (PCR) is a process for amplifying or multiplying quantities of double-stranded deoxyribonucleic acid (DNA). In a PCR apparatus, a thermal cycler block has one or more wells for holding vials containing a suspension of ingredients for a reaction to produce more DNA starting with "seed" samples of the DNA. The starting ingredients in an aqueous suspension, in addition to the seed sample, include selected DNA primer strands, DNA elements, enzymes and other chemicals. The temperature of the block is cycled between a lower temperature extension phase of the PCR reaction at about 60°C, which is the phase where all of the DNA strands have recombined into double strands, and a high temperature denaturing phase at about 95°C, during which the DNA is denatured or split into single strands. Such a temperature program essentially doubles the DNA in each cycle, thus providing a method for replicating significant amounts of the DNA from a small starting quantity. The PCR process is taught, for example, in US 4 683 202. Quantitative measurements have been made on the DNA production during the PCR process, to provide measures of the starting amount and the amount produced. Measurements and computation techniques are taught in US. 5 766 889, as well as in an article "Kinetic PCR Analysis: Real-time Monitoring of DNA Amplification Reactions" by Russel Higuchi, et al., Bio/Technology vol. 11, pp. 1026-1030 (September 1993), and an article "Product Differentiation by Analysis of DNA Melting Curves during the Polymerase Chain Reaction" by Kirk M. Ririe, et al., Analytical Biochemistry vol. 245, pp. 154-160 (1997).

Prior measuring techniques have utilized microvolume fluorometers (spectrofluorometers) and a simple arrangement of a video camera with illumination lamps. Such apparatus utilize dyes that fluoresce in the presence of double-stranded DNA. These techniques and instruments are not particularly adapted to PCR apparatus for routine monitoring of the reaction. There also is a need for greater precision during the monitoring and measurements. Previous instruments that allow real time acquisition and analysis of PCR data have been very basic devices without the required dynamic range, do not have built-in calibration means, do not allow operation with sample well caps, or are very expensive.

US 5 736 333 describes a system for carrying out real-time fluorescence-based measurements wherein the excitation light is distributed to a plurality of reaction chambers, one at a time, by fibre optics. This known system utilizes the fibre optics also to collect the emission beams from each individual reaction chamber sequentially, one at a time, and to direct the signals to a detector via a fibre optic multiplexer. The multiplexer sequentially focuses the emission signals onto a CCD detector. At the ends of the fibres, a lens is provided for focusing the excitation beam on the reaction chamber and for collecting the fluorescence emission beam and focusing it onto the end of the fibre. In this system, the fibres and associated lenses work in integral cooperation with each other both optically and mechanically since the lenses are associated with a carrier plate provided above a heating element of a PCR thermocycler.

EP 0 640 828 A1 discloses an apparatus for simultaneous monitoring reactions in multiple well sample plates by fluorescence .excitation and detection of the fluorescence emission in a parallel processing system. The array of the samples in the multiple reaction chambers is focused on a CCD camera to permit parallel processing of the fluorescence emission signals. The output from the individual reaction chambers is identified by assigning a group of pixels of the CCD detector to an area of the image that encompasses a single image of a reaction chamber. This can be done manually by an operator or using a program that looks at the fluorescence value of each of the pixels of the respective group and determines which pixel belongs to which reaction chamber.

An object of the present invention is to provide a novel optical instrument which may be used for quantitative monitoring of DNA replication in a PCR apparatus. Other objects are to provide such an instrument with improved dynamic range, automatic selection of exposure time to extend the dynamic range, automatic adjustment for drift, simplified operation, relatively low cost, and easy changing of optics to accommodate different fluorescent dyes.

### SUMMARY

The foregoing objects are achieved, at least in part, by an optical instrument as defined in claim 1, which is particularly suited for monitoring polymerase chain reaction replication of DNA. The dependent claims relate to preferred embodiments of the invention as defined in claim 1. If the optical instrument is used for DNA PCR monitoring, the replication is in a reaction apparatus that includes a thermal cycler block for holding a plurality of vials containing a suspension of ingredients for the reaction. The ingredients include a fluorescent dye that fluoresces proportionately in presence of DNA.

The block is configured to hold a plurality of vials, and the focusing means comprises a corresponding plurality of vial lenses each disposed over a vial such that the emission beam comprises individual beams each associated with a vial. The Fresnel lens is disposed cooperatively with the vial lenses to effect focusing of the excitation beam into each suspension, and to pass the individual beams to the second means (beam splitter). The detector comprises an array of photoreceptors receptive of the individual beams to generate corresponding data signals such that the processing means computes concentration of DNA in each vial.

The instrument should also include an excitation filter between the light source and the beam splitter, and an emission filter between the beam splitter and the detector. The splitter and filters are associated with a selected primary dye in the suspension. In a further embodiment, a filter module contains the splitter and filters, and the module is removable from the housing for replacement with another module associated with another selected primary dye.

For a reference, a fluorescent reference member emits reference light in response to the excitation beam. The reference is disposed to be receptive of a portion of the excitation beam. A portion of the reference light is passed as a reference beam to the detector, so as to generate reference signals for utilization in the computing of the concentration of DNA. Preferably the reference member comprises a plurality of reference emitters, each emitting a reference beam of different intensity in response to the excitation beam, to allow selection by the processor of a reference set having the highest data signals that are less than a predetermined maximum that is less than the saturation limit.

The detector is operatively connected to the processing means for the detector to integrate emission beam input over a preselected exposure time for generating each set of data signals, and the processing means or the detector or a combination thereof have a saturation limit for the data signals. The processing means used with the present invention comprises adjustment means for automatically effecting adjustments in exposure time to maintain the primary data within a predetermined operating range for maintaining corresponding data signals less than the saturation limit, and means for correcting the primary data in proportion to the adjustments in exposure time. Preferably, the processor computes photoreceptor data from the data signals for each photoreceptor, and the adjustment means ascertains highest photoreceptor data, determines whether the highest photoreceptor data are less than, within or higher than the predetermined operating range and, based on such determination, the exposure time is increased, retained or reduced so as to effect a subsequent exposure time for maintaining subsequent photoreceptor data within the predetermined operating range.

### BRIEF DESCRIPTION OF THE DRAWINGS

**FIG. 1** is a schematic of an optical train for an optical instrument according to the invention, associated with a polymerase chain reaction (PCR) reaction apparatus.
**FIG. 2** is a perspective of the instrument of FIG. 1 with a side panel removed.
**FIG. 3** is an exploded perspective of a module shown in FIG. 2.
**FIG. 4** is a perspective of a reference member in the optical train of FIG. 1.
**FIG. 5** is a flow chart for computing DNA concentration from data obtained with the instrument of **FIG. 1****.**
**FIG. 6** is a flow chart for determining exposure time for data acquisition in operation of the instrument of FIG. 1 and for computations in the flow chart of FIG. 5.
**FIG. 7** is a graph of extension phase data of fluorescence vs. cycles from operation of the instrument of **FIG. 1** with a PCR apparatus.
**FIG. 8** is a flow chart for computing secondary data for computations in the flow chart of **FIG. 5****.**
**FIG. 9** is a flow chart for computing ratios between the plurality of reference emitter segments of the reference member of FIG. 4.

### DETAILED DESCRIPTION

An optical instrument A of the invention is utilized with or incorporated into a reaction apparatus B that replicates ("amplifies") selected portions of DNA by polymerase chain reaction ("PCR"). The reaction apparatus is conventional and should function without interference from the instrument which monitors the amount of DNA in real time during replication. Suitable reaction apparatus are described in U.S. patent Nos. 5,475,610 and 5,656,493.

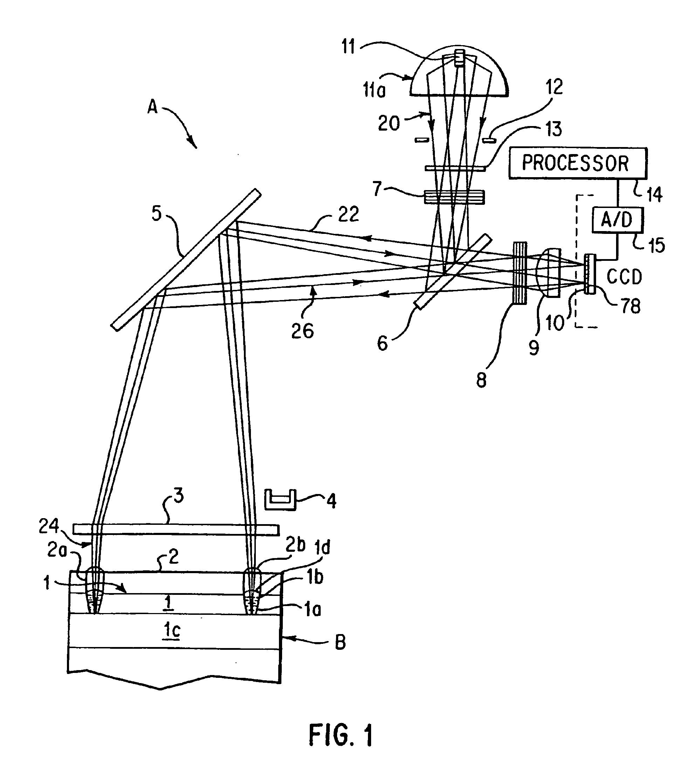

The reaction apparatus (FIG. 1) is conventional and has two main components, namely a thermal cycler block **1** with wells **1a** for holding at least one vial **1b** containing a suspension of ingredients for the reaction, and a thermal cycle controller **1c** for cycling the temperature of the block through a specified temperature program. The starting ingredients of the aqueous suspension of sample materials include a "seed" sample of DNA, selected DNA primer strands, DNA elements, enzymes and other chemicals. The block, typically aluminum, is heated and cooled in a prescribed cycle by electrical means, liquid or air coolant, or a combination of these, or other means to achieve the cycling. The suspensions in the vials are thereby cycled between two temperature phases so as to effect the polymerase chain reaction. These phases are a lower temperature extension phase of the PCR reaction at about 60°C, which is the phase where all of the DNA strands have recombined into double strands, and a high temperature denaturing phase at about 95°C, during which the DNA is denatured or split into single strands.

For the present purpose the sample also contains a fluorescent dye that fluoresces proportionately and more strongly in the presence of double stranded DNA to which the dye binds, for example SYBR Green dye (available from Molecular Probes, Inc., Eugene, Oregon) that fluoresces in the presence of double stranded DNA. Another type of fluorescent dye labeled "probes", which are DNA-like structures with complementary sequences to selected DNA strand portions, may also be used. Other dyes that have similar characteristics may be utilized. As used herein and in the claims, the term "marker dye" refers to the type that binds to double stranded DNA, or to the probe type, or to any other type of dye that attaches to DNA so as to fluoresce in proportion to the quantity of DNA. Samples may also contain an additional, passive dye (independent of the DNA) to serve as a reference as described below. Under incidence of light having a correct excitation frequency, generally a dye fluoresces to emit light at an emission frequency that is lower than that of the excitation light.

The vials typically are formed conically in a plastic unitary tray containing a plurality of vials, for example 96 in an array of 12 by 8. The tray preferably is removable from the block for preparations. A plastic unitary cover with caps **1d** for the vials may rest or attach over the vials to prevent contamination and evaporation loss. Other means may be used for this function, such as oil on the sample surface, in which case caps are not needed. If used, the caps are transparent to light utilized in the instrument, and may be convex facing upwardly.

The monitoring instrument is mounted over the block containing the vials. The instrument is removable or swings away for access to the vials. In the bottom of the instrument, a platen 2 rests over the vial caps or, if none, directly over the vials. The platen, advantageously aluminum, has an array of holes **2a** therethrough aligned with the vials, each hole having a diameter about the same as the vial top diameter. If there are caps, the platen should have its temperature maintained by a film heater or other means for heating the platen sufficiently to prevent condensation under the caps without interfering with DNA replication in the vials, for example holding the platen at slightly higher temperature than the highest sample temperature that the thermal cycler reaches.

Above each of the vials is a lens **2b** positioned for its focal point to be approximately centered in the suspension in the vial. Above these lenses is a field lens **3** to provide a telecentric optical system. Advantageously the field lens is an aspherically corrected Fresnel lens for minimal distortion. A neutral density pattern (not shown) to correct nonuniformities in illumination and imaging may be mounted on or in proximity to the field lens, for example to attenuate light in the center of the image field. A folding optical mirror 5 is optionally mounted at 45° for convenient packaging. This may be omitted, or other such folding optics may be used. Also the field lens, and/or the vial lenses, each may be comprised of two or more lenses that effect the required focusing, the word "lens" herein including such multiplicities.

A light source **11** for a source beam **20** of light is provided, for example a 100 W halogen lamp. Preferably this is mounted at a focal distance of an ellipsoid reflector **11a** which produces a relatively uniform pattern over the desired area. Also, advantageously, the reflector should be dichroic, i.e. substantially reflecting visible light and transmitting infrared light, to restrict infrared from the other optical components and from overheating the instrument. This is further aided by a heat reflecting mirror 13 in the optical path. A mechanical or electronic shutter **12** allows blockage of the light source for obtaining dark data. The type of light source is not critical, and other types may be used such as a projection lamp or a laser, with appropriate optical elements.

A beam splitter **6** is disposed to receive the source beam 20. In the present embodiment this is a dichroic reflector such that, positioned at 45°, it reflects light having an excitation frequency that causes the marker dye to fluoresce at an emission frequency, and passes light having the emission frequency. Such a conventional optical device typically utilizes optical interference layers to provide the specific frequency response.

The beam splitter is positioned to reflect the source beam 20 to the folding mirror 5. The source beam is reflected from the beam splitter 6 as a excitation beam 22 having substantially the excitation frequency. The excitation beam is focused by the field lens **3** and then as separated beams **24** by the vial (well) lenses **2b** into the center of the vials. The marker dye is thereby caused to emit light at the emission frequency. This light is passed upwardly as an emission beam in the form of individual beams **26** that are reflected from the folding mirror 5 to the beam splitter 6 which passes the emission beam through to a detector 10.

Together the vial lenses **2b** and the field lens **3** constitute a primary focusing means for focusing both the excitation beam and the emission beam.

Also, alternatively, the beam splitter **6** may pass the source beam as an excitation beam and reflect the emission beam, with appropriate rearrangement of the lamp and the detector. Moreover, other angles than 45° could be used if more suitable for the beam splitter, such as a more perpendicular reflection and pass through. More broadly, the beam splitter splits the optical paths for the excitation beam and the emission beam, and other variations that achieve this may be suitable. It is desirable to minimize source light reaching the detector, which the dichroic device helps achieve. A non-dichroic beam splitter may be used but would be less efficient as significant source light may reach the detector, or may be reflected or transmitted in the wrong direction and lost.

To further filter the source light, an excitation filter **7** is disposed between the light source **11** and the beam splitter **6**. This passes light having the excitation frequency and substantially blocks light having the emission frequency. Similarly, an emission filter **8** is disposed between the beam splitter and the detector, in this case between the splitter and a detector lens **9** in front of the detector. This filter passes light having the emission frequency and substantially blocks light having the excitation frequency. Although a detector lens is preferred, a focusing reflector may be substituted for the detector lens. Such an emission focusing means (detector lens or reflector) may be located after (as shown) or before the beam splitter and on either side of the emission filter, and alternatively may be integrated into the primary focusing means. For example, the field lens may be an objective lens that focuses the emission beam onto the detector.

Suitable filters are conventional optical bandpass filters utilizing optical interference films, each having a bandpass at a frequency optimum either for excitation of the fluorescent dye or its emission. Each filter should have very high attenuation for the other (non-bandpass) frequency, in order to prevent "ghost" images from reflected and stray light. For SYBR Green dye, for example, the excitation filter bandpass should center around 485 nm wavelength, and the emission filter bandpass should center around 555 nm. The beam splitter should transition from reflection to transmission between these two, e.g. about 510 nm, so that light less than this wavelength is reflected and higher wavelength light is passed through.

More broadly, the excitation filter and the beam splitter together constitute a first means disposed to be receptive of the source beam to effect an excitation beam having the excitation frequency, and the emission filter and the beam splitter together constitute a second means disposed to be receptive of the emission beam from the focusing means so as to pass the emission beam at the emission frequency to the detector. Also, as mentioned above, the beam splitter alternatively may pass the source beam as an excitation beam and reflect the emission beam to the detector. In another aspect, the filters may be omitted, and the first means is represented by the beam splitter effecting the exitation beam from the source beam, and the second means is represented by the beam splitter passing the emission beam to the detector.

In another arrangement, the beam splitter may be omitted, and the first means may constitute an excitation filter for the excitation frequency, the second means may constitute an emission filter for the emission frequency, with the light source and the detector being side by side so that the excitation and emission beams are on slightly different optical paths angularly. The source and detector need not actually be side by side with one or more folding mirrors. Thus any such arrangement for achieving the effects described herein should be deemed equivalent. However, use of the beam splitter is preferred so that the excitation and emission beams through the field lens will have the same optical path.

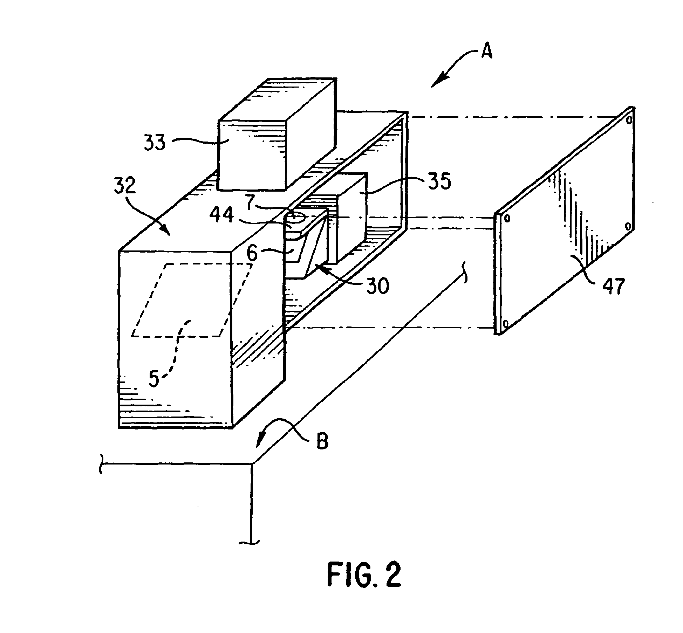

Advantageously the beam splitter **6**, the excitation filter **7** and the emission filter **8** are affixed in a module **30 (****FIG. 2****)** that is associated with a selected primary dye for the suspension. The module is removable from the housing **32** of the instrument A for replacement with another module containing different beam splitter and filters associated with another selected primary dye. The instrument includes a lamp subhousing **33** and a camera subhousing **35**.

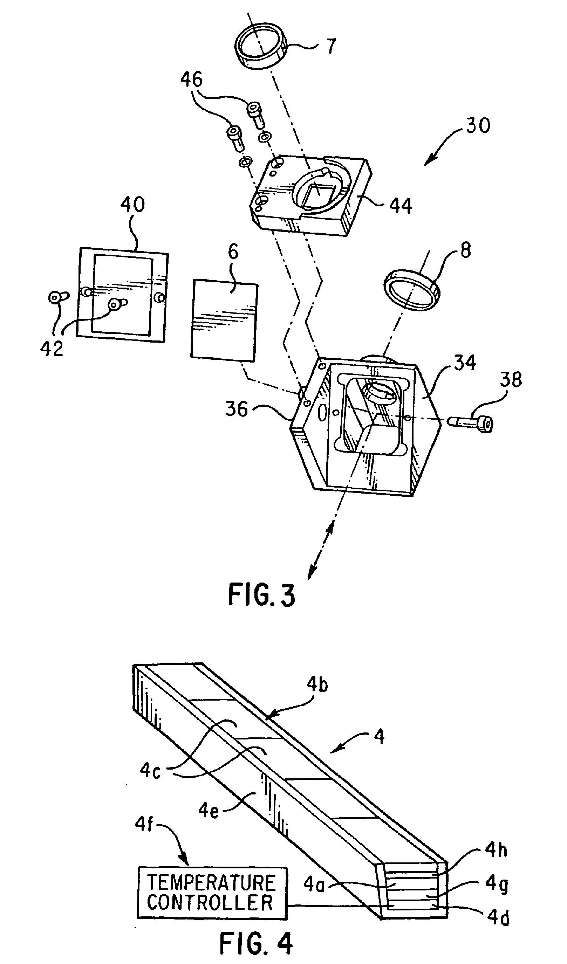

In an example (**FIG. 3**), each module includes a mounting block **34** with a flange **36** that is affixable to the housing with a single screw **38**. The beam splitter **6** is held at 45° in the block with a frame **40** and screws **42**. The emission filter **8** mounts (e.g. with glue) into the block. The excitation filter **7** mounts similarly into a mounting member **44** that is held by screws **46** to the block. With the module in place, the instrument is closed up with a side plate **47** that is screwed on. Positioning pins (not shown) ensure repeatable alignment. The replacement module may have the same mounting block and associated components, with the beam splitter and filters replaced.

The detector lens **9** (**FIG. 1**) is cooperative with the vial lenses **2b** and the field lens **3** to focus the individual beams on the detector **10**. The lens should be large aperture, low distortion and minimum vignetting.

The detector preferably is an array detector, for example a charge injection device (CID) or, preferably, a charge coupled device (CCD). A conventional video camera containing a CCD detector, the detector lens and associated electronics for the detector should be suitable, such as an Electrim model 1000L which has 751 active pixels horizontal and 242 (non-interlaced) active pixels vertical. This camera includes a circuit board that directly interfaces to a computer ISA bus. No framegrabber circuitry is required with this camera. Essentially any other digital imaging device or subsystem may be used or adapted that is capable of taking still or freeze-frame images for post processing in a computer.

A detector with a multiplicity of photoreceptors (pixels) **78** is used for a plurality of vials, to provide separate monitoring of each. A CCD receives light for a selected integration period and, after analog/digital conversion, reads out digital signal data at a level accumulated in this period. The integration is effectively controlled by an electronic shutter, and a frame transfer circuit is desirable. Signal data are generated for each pixel, including those receiving the individual beams of emitted light from the vials.

The instrument preferably includes a fluorescent reference member **4** that emits reference light in response to the excitation beam. Advantageously the reference member is formed of a plurality of reference emitters, e.g. 6, each emitting a reference beam of different intensity in response to the excitation beam. The range of these intensities should approximate the range of intensities expected from the marker dye in the vials; for example each segment may be separated in brightness by about a factor of 2.5. The reference member is disposed to receive a portion of the excitation beam from the beam splitter. A good location is adjacent to the field lens, so that the optical paths associated with the member approximate those of the vials. Most of the reference light passes back through the beam splitter as a reference beam to the detector. The detector pixels receive the emission beam to generate reference signals for utilization along with the data signals in the computing of the concentration of DNA.

Advantageously the reference member **4** (**FIG. 4**) comprises a plastic fluorescent strip **4a** and a neutral density filter **4b** mounted over the fluorescent strip, optionally with an air space 4h between, such that a portion of the excitation beam and the reference beam are attenuated by the neutral density filter. The neutral density filter has a series of densities **4c** to effect the plurality of reference emitters (segments) each emitting a reference beam of different intensity. A heating strip **4d** and an aluminum strip **4g** to smooth the heating are mounted in a trough 4e on the bottom thereof, and the fluorescent strip is mounted on the aluminum strip over the heating strip. To prevent heat loss, this assembly preferably is covered by a transparent plexiglass window (not shown, so as to display the varying density filter). To help maintain constant fluorescence, the heating strip is controlled to maintain the fluorescent strip at a constant temperature against the thermal cycles of the cycler block and other effects. This is done because most fluorescent materials change in fluorescence inversely with temperature.

The computer processor **14** (**FIG. 1**) may be a conventional PC. The computer programming is conventional such as with "C". Adaptations of the programming used with the present invention will be readily recognized and achieved by those skilled in the art. The processor selectively processes signals from pixels receiving light from the vials and the reference emitters, ignoring surrounding light. The programming therefore advantageously includes masking to define the pixel regions of interest (ROI), e.g. as disclosed in copending provisional patent application serial No. 60/092,785 filed 07/14/98 of the present assignee. Mechanical alignment of the optics may be necessary to cooperatively focus the beams into the programmed regions of interest. The analog data signals are fed to the processor through an analog/digital (A/D) device **15** which, for the present purpose, is considered to be part of the processor. A saturation level is proscribed by either the detector or the A/D or, preferably, the CCD dynamic range is matched to the A/D dynamic range. A suitable range is 8 bits of precision (256 levels), and the CCD amplifier offset is set so that the dark signal output of the CCD (with the shutter **12** closed) is within the A/D range. The processor instructs the detector with selected exposure time to maintain the output within the dynamic range.

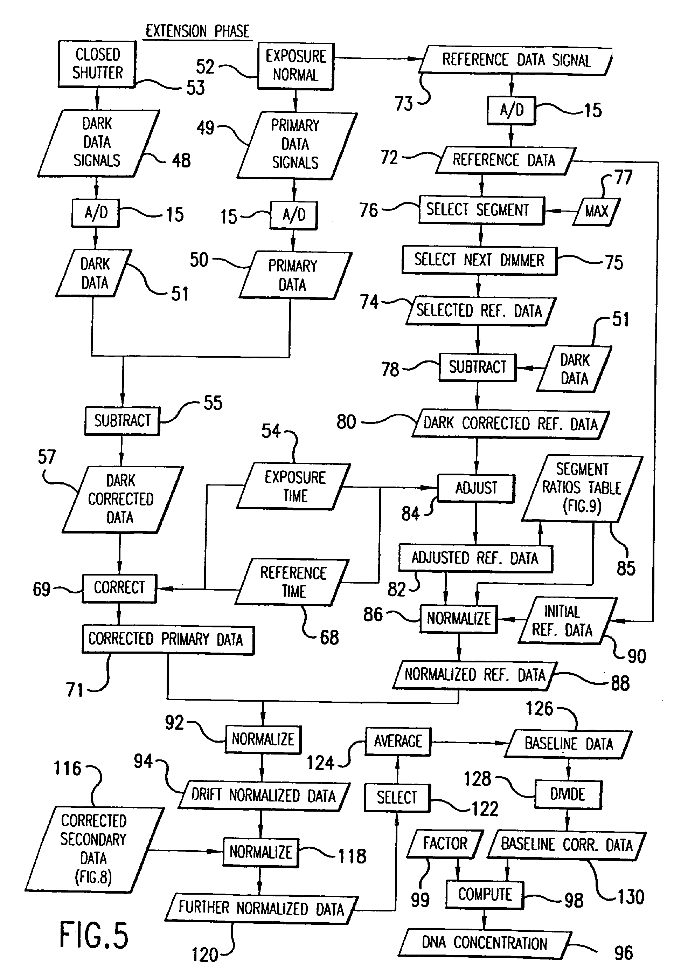

In a typical operation, fluorescence data are taken from the plurality of vials (e.g. 96 regions of interest) and from the reference emitter segments, for each cycle in a DNA reaction replication sequence of thermal cycles, typically 40 to 50. Two data sets are taken (**FIG. 5**) for each thermal cycle during the extension phase of the PCR reaction at about 60°C, which is the phase where all of the DNA strands have recombined into double strands. One set is normal primary data **50** (along with reference data described below) and the other is dark signal data **51** with the mechanical shutter closed. Both digital data sets **50, 51** are converted by the A/D **15** from respective analog data signals **48, 49** from the detector. The dark are subtracted **55** from the normal, to yield dark-corrected data **57**. In a simple procedure, the subtraction is pixel by pixel. Alternatively, total dark for each region of interest are subtracted from corresponding total fluorescence data. In another alternative, in order to increase effective dynamic range, it is advantageous to collect multiple exposures during each exposure period, e.g. 4 or 8 exposures. This is done by collecting multiple normal exposures and dark signal data for each pixel, subtracting each respective dark image from the normal data, then adding the subtracted data together to yield the primary data. This improves the statistical validity of the image data and increases its effective dynamic range.

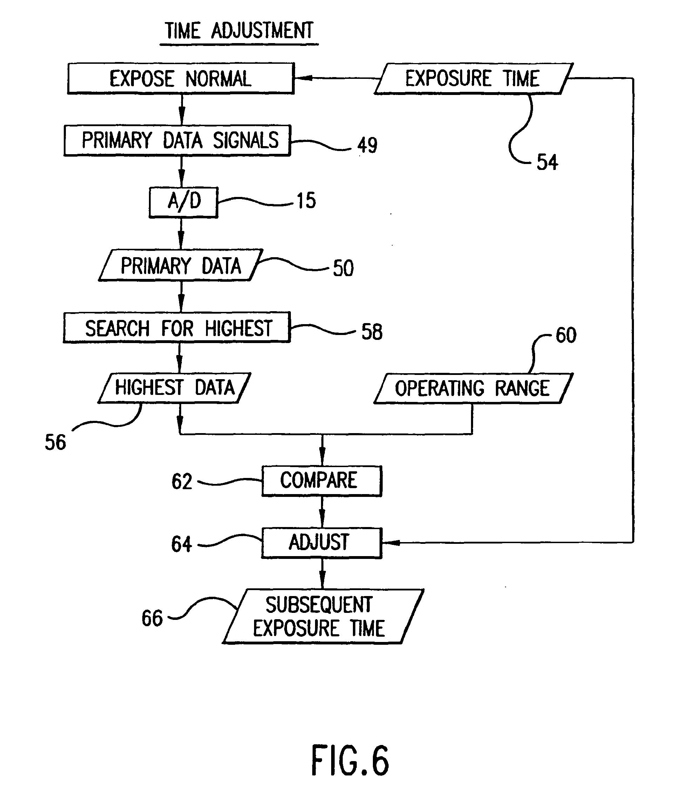

Data are taken simultaneously from the reference strip which has, for example, 6 segments together with the 96 vials for a total of 102 regions of interest. Preferably the processing means provides for automatic adjustment of the exposure time to maintain the data signals within a predetermined operating range that is less than the saturation limit during the DNA replication sequence, for example 35% to 70% of saturation. Computations for DNA concentration include corrections in proportion to adjustments in exposure time (**FIG. 6**). Signal data **50**, **51** from each exposure **52**, **53** are obtained during a previously determined exposure time **54** by totaling the pixel counts within each region of interest (ROI).

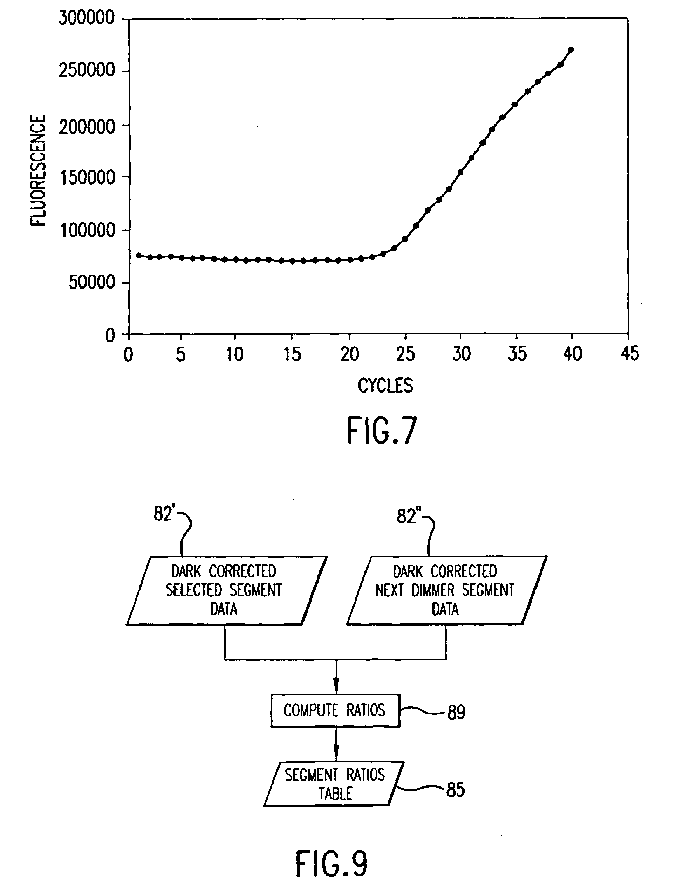

To provide the time adjustments, the highest signal data **56**, which is data from one or more highest pixel readings, such as the three highest-reading contiguous pixels, is searched out **58** from the corresponding data signals **50**. From a comparison **62** it is determined whether the highest signal data are less than, within or higher than the selected operating range **60**. Based on such determination, the exposure time is adjusted **64**, i.e. increased, retained or reduced, to obtain the subsequent exposure time 66. A reference time **68** (**FIG.5**) also is selected which may be, for example, an initial time or a fixed standard time such as 1024 ms. The dark-corrected data **57** is time-corrected **69** to yield corrected primary data **71**, dividing by ratio of actual exposure time to the reference time. The first several cycles may be out of range, and thereafter a useful fluorescence curve should be obtained (**FIG. 7**).

For the reference emitter, from the pixels receiving light from the reference strip **4** (**FIGS. 1** and **4**) reference data signals **73** are generated and converted by the A/D **15** to reference data **72**. Selected reference data **74** from a specific reference segment **4c** (**FIG.4**) are selected **76** as that data having the highest signal strength that is less than a predetermined maximum **77** that, in turn, is less than the saturation limit, e.g. 70%. A next dimmer segment is also selected **75**, and the selected reference data **74** include the data from that segment. The dark data **51** are subtracted **78** from the reference data **74**, and the dark-corrected data **80** are adjusted **84** for exposure time **54** to yield adjusted reference data **82**.

The data **82** includes dark corrected data **82'** for the highest segment and dark corrected data **82"** for the next dimmer segment (**FIG.9**). The ratios of brightness between each segment are computed **89** and built up over the course of data collection. Each time data is collected, the ratio between the highest and next dimmer segment is calculated. As different optimum segments are selected on succeeding data collections, a table of ratios **85** is assembled. Alternatively, these rations may be collected and calculated in advance.

This adjusted reference data **82'** (from **data 82**, **FIG. 5**) are utilized for computing normalized reference data **88** which are normalized **86** in real time as a ratio to reference data **90** from an initial or other selected previous cycle in the DNA replication (PCR) sequence by working back with the ratios **85**. The normalized reference data are utilized on the corrected primary data **71** in a normalization computation **92** to provide drift normalized primary data **94** by dividing the primary data by the normalized reference data. This corrects for instrument drift during the monitoring. DNA concentration **96** may then be computed **98** from a stored calibration factors **99**, determined by running standard known DNA concentrations to determine the slope and intercept of a line relating starting concentration to the starting cycle of the growth curve (**FIG. 7**) as taught in the aforementioned article by Higuchi and Patent US 5 766 889. (Further normalization **118, 120** and baseline correction **122-130** are discussed below.)

Extension phase data for a typical PCR sequence would look like **FIG. 7**, plotted for each PCR cycle. If desired, the data may be corrected for dye bleaching or other sample chemical effects by normalizing to sample vials containing samples with the same dye and with DNA amplification prevented chemically.

The sample additionally may contain one or more types of dye molecules that serve as a "passive" reference having some fluorescence in the same wavelength range as the DNA binding dye. This reference dye is made up, for example, of a nucleic acid sequence labeled with Rhodamine and Fluorescein dye derivatives. A suitable reference is Rox dye from Perkin-Elmer Applied Biosystems. These passive dye molecules do not take part in the PCR reaction, so that their fluorescence is substantially without influence from DNA and remains constant during the reaction. This fluorescence can be used to normalize the fluorescence from the DNA binding dye with a standard concentration of passive dye included in the ingredients of at least one vial, preferably in every vial.

The source beam includes a secondary excitation frequency that causes the passive dye to fluoresce at a secondary frequency and thereby emit a secondary beam directed to the detector to generate corresponding secondary data signals. The processor is receptive of the secondary data signals for computing secondary data representative of standard concentration. These data are used to normalize the primary data, so that the concentration of DNA is normalized to the standard concentration of passive dye after correcting computations of concentration of DNA in proportion to adjustments in exposure time, and in conjunction with the normalization for drift. Advantageously, and in the present example, the secondary excitation frequency is identical to the primary excitation frequency, and the passive dye fluoresces such that the emitted secondary beam is substantially at the emission frequency. The primary data signals are generated during each extension phase of cycling of the thermal cycler block when DNA is recombined and correspondingly primary dye emission is maximized. The secondary data signals are generated during each denature phase of cycling of the thermal cycler block when DNA is denatured and correspondingly primary dye emission is minimized. Thus data signals for the primary phase are substantially representative of DNA concentration, and data signals for the secondary phase are substantially representative of the standard concentration of passive dye.

The dark and normal data are taken for the vial samples and the reference strip, and the dark is subtracted from the normal fluorescence data. This dark and normal data set is taken during the extension phase of the PCR reaction at about 60°C, which is the phase where all of the DNA strands have recombined into double strands. During this phase, the fluorescence from the DNA binding dye is maximized, and the fluorescence from the passive reference molecules is superimposed but much smaller. A separate dark and normal data set is taken during the high temperature (about 95°C) denaturing phase, during which the DNA is denatured or split into single strands. During this phase, the fluorescence of the DNA binding dye is minimized, and almost non-existent, because the DNA is not double stranded and the fluorescence of the dyes used have a large decrease in fluorescence with increased temperature. Therefore the denaturing phase images substantially contain reference fluorescence from the passive reference molecules. The dark-corrected reference (denaturing) data set, after correction for measured temperature dependence, may be subtracted from the dark-corrected DNA binding dye data set, or may be deemed insignificant for the normal data set.

Alternatively, it may be desirable to image the passive reference dye labeled molecules by taking the additional images, for each PCR cycle, using a separate optical bandpass filter that rejects wavelengths emitted by the DNA binding dye while accepting wavelengths from the passive reference dye. This data would be functionally equivalent to the denature data.

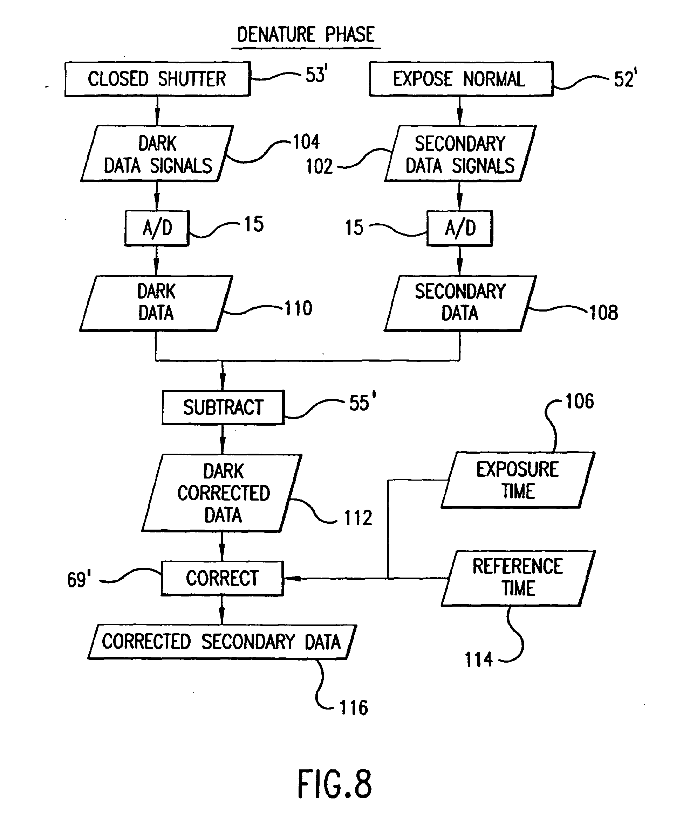

Illustrating operation for the denature phase (**FIG. 8**), respective normal and dark data signals **102, 104** are obtained in the same manner as for the primary data, with normal exposure **52'** and closed shutter **53'**. Exposure time **106** may be the same as for an adjacent extension phase in the sequence, or determined from a previous denature phase run (as described with respect to **FIG. 7**), or may be a suitable time predetermined for all denature phases in the sequence. The A/D **15** converts the signals to secondary data 108 and dark data **110**. The dark is subtracted **55'** from the secondary to yield dark-corrected data **112** which is further corrected **69'** with a reference time **114** and the actual exposure time **106** to yield corrected secondary data **116.**

The extension cycle, drift normalized primary data **94** then are normalized **118** by dividing by the average of a selected number (e.g. 10) of cycles for the denature phase corrected secondary data **116** to produce further normalized fluorescence data or further normalized data **120,** which removes sample well to well non-uniformity effects. Cycle by cycle division may be used in place of an average. Alternatively the secondary data may be applied to the corrected primary data **71** before or after drift normalization. Baseline samples may be selected **122** and averaged **124** to produce baseline data **126**. The further normalized data **120** are then divided **128** by the baseline data to yield baseline corrected data **130**. These baseline samples are selected so as to be before the PCR growth exceeds the nearly horizontal base line portion of the curve in **FIG. 7**. Selected baseline cycles may be, for example, cycles 6 through 15. After further normalization **118**, the further normalized data **118** are used to compute **98** DNA concentration **96**.

The trend (e.g. least squares regression line) of these same baseline samples is subtracted from the normalized extension cycle data, to produce data that has a flat base line at zero. This data set may then be processed using established or other desired PCR methods to calculate the amount of starting copies of DNA. A simple procedure is to extrapolate for the inflection point at the transition from flat to rising. A more sophisticated procedure is described in the aforementioned U.S. patent No. 5,766,889.

The data may be used for various purposes, for example quantitative monitoring of the reaction or determination of replicated DNA concentration, or determination of the starting amount. The instrument also may be used (with or without normalizations and other corrections) simply to display whether replication is taking place during a sequence, or has taken place.

While the invention has been described above in detail with reference to specific embodiments, various changes and modifications which fall within the scope of the appended claims will become apparent to those skilled in this art. Therefore, the invention is intended only to be limited by the appended claims.

## Claims

1. Optical instrument, comprising
- a platen (2) having an array of holes (2a) for alignment with a plurality of spaced-apart vials (1b) for reaction ingredients,
- a light source (11) adapted to direct an excitation beam (22) toward the plurality of vials (1b) for simultaneous illumination of the vials (1b) and to produce emission beams (26) therefrom,
- a light detector (10) disposed along the emission beam path and arranged to receive the emission beams (26) from the vials (1b) simultaneously,
and
- a Fresnel lens (3) disposed at the plurality of vials (1b) in the excitation beam path from the light source (11) and in the emission beam path from the plurality of vials (1b) and focussing the emission beams (26) onto the light detector (10),
**characterized in that**
- the excitation beam (22) and the emission beams (26) pass through the Fresnel lens (3) and are disposed to have the same optical path,
- a plurality of vial lenses (2b) are disposed along an excitation beam path between the Fresnel lens (3) and the plurality of vials (1b),
- the excitation beam (22) is focused by the Fresnel lens (3) and then as a plurality of separated beams (24) by the vial lenses (2b) into the vials (1b),
- the emission beams (26) are focussed through the vial lenses (2b) and the Fresnel lens (3) onto the light detector (10), and
- the Fresnel lens (3) is disposed together with the vial lenses (2b) to provide a telecentric optical system.

2. Instrument according to claim 1, wherein the detector (10) generates primary data signals (49, 50) representative of the emission beams (26).

3. Instrument according to claim 1 or 2, further comprising a processor (14) to receive the primary data signals (49, 50) and compute corresponding concentrations in the respective vials (1b).

4. Instrument according to any of claims 1 to 3, further comprising a detector lens (9) disposed along the emission beam path between the Fresnel lens (3) and the light detector (10).

5. Instrument according to any of claims 1 to 4, further comprising an excitation beam filter (7) disposed along the excitation beam path between the light source (11) and the Fresnel lens (3).

6. Instrument according to any of claims 1 to 5, further comprising an emission beam filter (8) disposed along the emission beam path between the light detector (10) and the Fresnel lens (3).

7. Instrument according to any of claims 1 to 6, further comprising a folding mirror (5) disposed along the excitation beam path between the light source (11) and the Fresnel lens (3).

8. Instrument according to any of claims 1 to 7, further comprising a beam splitter (6) disposed along the excitation beam path between the light source (11) and the Fresnel lens (3).

## Patentansprüche

1. Optisches Instrument, das aufweist:
- eine Platte (2) mit einer Anordnung von Löchern (2a), die zu einer Vielzahl von voneinander beabstandeten kleinen Gefäßen (1b) für Reaktionskomponenten ausgerichtet sind,
- eine Lichtquelle (11), die so ausgebildet ist, dass zur gleichzeitigen Beleuchtung der kleinen Gefäße (1b) und zur Erzeugung von Emissionsstrahlen (26) davon ein Anregungsstrahl (22) auf die Vielzahl von kleinen Gefäßen (1b) gerichtet werden kann,
- einen Lichtdetektor (10), der im Lichtweg des Emissionsstrahls angeordnet und so ausgebildet ist, dass er die Emissionsstrahlen (26) von den kleinen Gefäßen (1b) gleichzeitig empfängt,
und
- eine Fresnel-Linse (3), die an der Vielzahl von kleinen Gefäßen (1b) im Lichtweg des Anregungsstrahls von der Lichtquelle (11) und im Lichtweg des Emissionsstrahls von der Vielzahl von kleinen Gefäßen (1b) angeordnet ist und die Emissionsstrahlen (26) auf den Lichtdetektor (10), fokussiert,
**dadurch gekennzeichnet, dass**
- der Anregungsstrahl (22) und die Emissionsstrahlen (26) durch die Fresnel-Linse (3) hindurchgehen und so angeordnet sind, dass sie den gleichen Lichtweg aufweisen,
- eine Vielzahl von Gefäßlinsen (2b) im Lichtweg eines Anregungsstrahls zwischen der Fresnel-Linse (3) und der Vielzahl von kleinen Gefäßen (1b) angeordnet ist,
- der Anregungsstrahl (22) durch die Fresnel-Linse (3) und dann durch die Gefäßlinsen (2b) in Form einer Vielzahl getrennter Strahlen (24) in die kleinen Gefäße (1b) fokussiert wird,
- die Emissionsstrahlen (26) durch die Gefäßlinsen (2b) und die Fresnel-Linse (3) auf den Lichtdetektor (10) fokussiert werden und
- die Fresnel-Linse (3) zusammen mit den Gefäßlinsen (2b) ein telezentrisches optisches System ergibt.

2. Instrument nach Anspruch 1, bei dem der Detektor (10) primäre Datensignale (49, 50) erzeugt, die für die Emissionsstrahlen (26) repräsentativ sind.

3. Instrument nach Anspruch 1 oder 2, das ferner einen Prozessor (14) aufweist, der die primären Datensignale (49, 50) empfängt und entsprechende Konzentrationen in den betreffenden kleinen Gefäßen (1b) berechnet.

4. Instrument nach einem der Ansprüche 1 bis 3, das ferner eine Detektorlinse (9) aufweist, die im Lichtweg des Emissionsstrahls zwischen der Fresnel-Linse (3) und dem Lichtdetektor (10) angeordnet ist.

5. Instrument nach einem der Ansprüche 1 bis 4, das ferner ein Filter (7) für den Anregungsstrahl aufweist, das im Lichtweg des Anregungsstrahls zwischen der Lichtquelle (11) und der Fresnel-Linse (3) angeordnet ist.

6. Instrument nach einem der Ansprüche 1 bis 5, das ferner ein Filter (8) für den Emissionsstrahl aufweist, das im Lichtweg des Emissionsstrahls zwischen dem Lichtdetektor (10) und der Fresnel-Linse (3) angeordnet ist.

7. Instrument nach einem der Ansprüche 1 bis 6, das ferner einen Umlenkspiegel (5) aufweist, der im Lichtweg des Anregungsstrahls zwischen der Lichtquelle (11) und der Fresnel-Linse (3) angeordnet ist.

8. Instrument nach einem der Ansprüche 1 bis 7, das ferner einen Strahlteiler (6) aufweist, der im Lichtweg des Anregungsstrahls zwischen der Lichtquelle (11) und der Fresnel-Linse (3) angeordnet ist.

## Revendications

1. Instrument optique, comprenant :
- une plaque (2) comportant un réseau de trous (2a) pour permettre un alignement avec une pluralité de flacons espacés (1b) pour les agents réactifs,
- une source lumineuse (11) adaptée pour diriger un faisceau d'excitation (22) en direction de la pluralité de flacons (1b) pour l'illumination simultanée des flacons (1b) et pour produire des faisceaux d'émission (26) partant de ceux-ci,
- un détecteur de lumière (10) placé sur le chemin des faisceaux d'émission et disposé pour recevoir des faisceaux d'émission (26) en provenance des flacons (1b) simultanément,
et
- une lentille de Fresnel (3) placée au niveau de la pluralité de flacons (1b) sur le chemin du faisceau d'excitation provenant de la source lumineuse (11) et sur le chemin des faisceaux d'émission provenant de la pluralité de flacons (1b) et focalisant les faisceaux d'émission (26) sur le détecteur de lumière (10),
**caractérisé en ce que**
- le faisceau d'excitation (22) et les faisceaux d'émission (26) passent à travers la lentille de Fresnel (3) et sont disposés de manière à suivre le même chemin optique,
- plusieurs lentilles de flacons (2b) sont placées sur un chemin du faisceau d'excitation entre la lentille de Fresnel (3) et la pluralité de flacons (1b),
- le faisceau d'excitation (22) est focalisé par la lentille de Fresnel (3) et puis, sous forme de plusieurs faisceaux séparés (24), par les lentilles de flacons (2b) en direction des flacons (1b),
- les faisceaux d'émission (26) sont focalisés à travers les lentilles de flacon (2b) et la lentille de Fresnel (3) sur le détecteur de lumière (10), et
- la lentille de Fresnel (3) est placée conjointement avec les lentilles de flacon (26) pour former un système optique télécentrique.

2. Instrument selon la revendication 1, dans lequel le détecteur (10) génère des signaux de données primaires (49, 50) représentatifs des faisceaux d'émission (26).

3. Instrument selon la revendication 1 ou 2, comprenant en outre un processeur (14) destiné à recevoir les signaux de données primaires (49, 50) et à calculer les concentrations correspondantes dans les flacons respectifs (1b).

4. Instrument selon l'une quelconque des revendications 1 à 3, comprenant en outre une lentille de détection (9) placée sur le chemin des faisceaux d'émission entre la lentille de Fresnel (3) et le détecteur de lumière (10).

5. Instrument selon l'une quelconque des revendications 1 à 4, comprenant en outre un filtre de faisceau d'excitation (7) placé sur le chemin du faisceau d'excitation entre la source lumineuse (11) et la lentille de Fresnel (3).

6. Instrument selon l'une quelconque des revendications 1 à 5, comprenant en outre un filtre de faisceaux d'émission (8) placé sur le chemin des faisceaux d'émission entre le détecteur de lumière (10) et la lentille de Fresnel (3).

7. Instrument selon l'une quelconque des revendications 1 à 6, comprenant en outre un miroir pliant (5) placé sur le chemin du faisceau d'excitation entre la source lumineuse (11) et la lentille de Fresnel (3).

8. Instrument selon l'une quelconque des revendications 1 à 7, comprenant en outre un diviseur de faisceau (6) placé sur le chemin du faisceau d'excitation entre la source lumineuse (11) et la lentille de Fresnel (3).
